# EUROPÄISCHE PATENTANMELDUNG

(11) **EP 1 025 752 A1**
(43) Veröffentlichungstag der Anmeldung: **09.08.2000**
(21) Anmeldenummer: 99101850.8
(22) Anmeldetag: 28.01.1999
(51) Int. Cl.: A01K 27/00, F16B 45/02

(54) **Hunde-Einhandleinenhaken**

(71) Anmelder: Müller, Hans-Joachim, 53547 Breitscheid (DE)
(72) Erfinder: Müller, Hans-Joachim, 53547 Breitscheid (DE)

(57) **Zusammenfassung**

Ein Hunde-Einhandleinenhaken besteht aus einem integralen Verbindungsstück zwischen Hundehalsband und Hundeleine, in dem sechs Funktionen so miteinander verbunden sind, daß der Hundeführer einhändig und ohne Sichtkontakt die Hundeleine mit dem Hundehalsband miteinander verbinden kann. Dies geschieht in der Form, in dem ein integrierter Fangarm (1) über das Hundehalsband gestreift wird und dieses dann mittels der Verschlußlamelle (2) in dem Fangarm gehalten wird. Durch den Fangarm bedingt wird der Hundeführer in die Lage versetzt, gleichzeitig mit der anderen noch freien Hand eine andere Tätigkeit auszuüben, wie beispielsweise das Tragen eines Regenschirmes, ohne diesen bei der Befestigung der Hundeleine ablegen zu müssen. Der Hunde-Einhandleinenhaken ist ergonomisch so ausgestaltet, daß ebenso ohne Sichtkontakt die Verschlußlamelle (2), welche Halsband und Hundeleine vor ungewolltem Trennen sichert, mit einem Finger zu betätigen und so die Verbindung wieder zu lösen.

Der Hunde-Einhandleinenhaken versetzt den Hundeführer in die Lage, Hund und Hundeleine mit nur einer Hand manipulieren zu können, die zweite Hand ist für diese Tätigkeit nicht erforderlich, sie kann verletzt sein oder unabhängig für andere Tätigkeiten benutzt werden.

## Beschreibung

Die Erfindung bezieht sich auf eine Hundeleine, welche als Verlängerung, zum einhaken in den Schnappverschluß, einen Einhandleinenhaken hinzugefügt bekommt.

Normalerweise verhält es sich mit einer Hundeleine so, daß der Schnappverschluß mit einer an dem Halsband angebrachten Öse verbunden wird, wozu der Hundeführer immer mit zwei Händen hantieren muß. Die Öse wird mit einer Hand gesucht und so ausgerichtet, daß die zweite Hand den Schnappverschluß an der Hundeleine öffnet und in die Öse einklinkt.

Dieser Vorgang ist oftmals mit vielerlei Umständen verbunden, weil eine Hand die Hundeleine hält, während die andere Hand einen anderen Gegenstand hält, welcher nicht in jeder Situation losgelassen werden kann.

Am besten läßt sich dieser Vorgang mit dem Halten eines Regenschirmes veranschaulichen.

Nur unter großen Umständen ist die Hundeleine mit dem angelegten Hundehalsband zu verbinden bzw. von diesem zu lösen, weil man den Regenschirm nicht loslassen bzw. abstellen kann und so die Hand, welche den Regenschirm hält, für keinen zweiten Handgriff einsetzbar ist.

Erfindungsgemäß wurde diesem Zustand Abhilfe ermöglicht, indem der übliche Schnappverschluß mit dem Halsband durch ein Hunde-Einhandleinenhaken verbunden wird.

Der Hunde-Einhandleinenhaken wird auf einer Seite mittels einer Öse mit dem Schnappverschluß einer Hundeleine verbunden und auf der gegenüberliegenden Seite, mit einem Fangarm ausgestattet, mit einer Hand ohne Sichtkontakt leicht um das Halsband des Hundes gelegt. Durch seine ergonomisch ausgebildete Form liegt der Hunde-Einhandleinenhaken immer so in der Hand, daß ein blindes Einfangen des Halsbandes ausführbar ist.

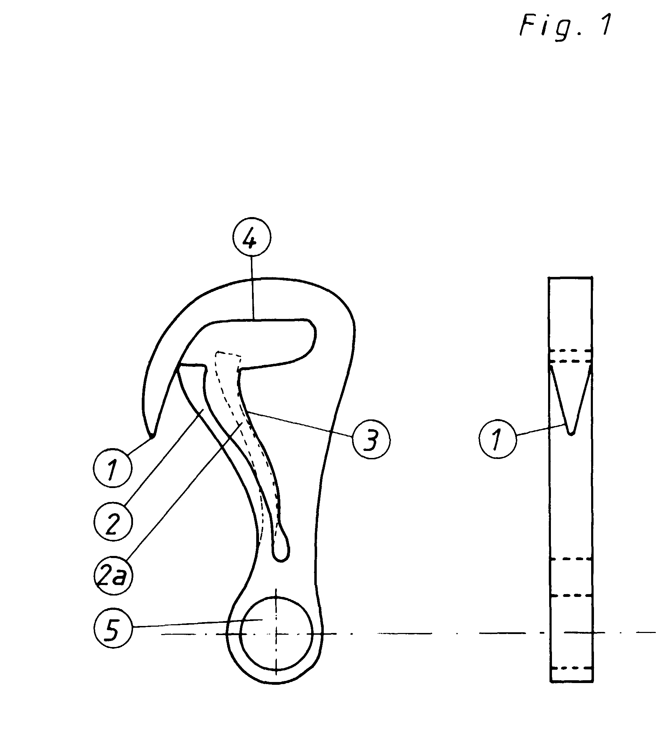

Die Erfindung wird anhand der Abbildung Fig. 1 nachstehend erläutert:

Fig. 1 zeigt den Hunde-Einhandleinenhaken mit seinen gegenüberliegenden Hauptelementen, den Fangarm (1) und den Leinenhakenring (6), welche den nicht dargestellten Hund mit seinem Halsband und die nicht dargestellte Hundeleine mit ihrem Schnappverschluß miteinander verbinden.

Der Fangarm (1) wir durch die Verschlußlamelle (2) mit Federwirkung so verschlossen, daß dieser mit seiner geraden Fläche (5) das Hundehalsband sicher umfaßt und so lange nicht losläßt, bis die Verschlußlamelle (2) mit dem Finger einer Hand zurückgedrückt wird und so wieder von dem Hundehalsband zu trennen ist.

Damit die Verschlußlamelle (2) nicht überdehnt werden kann, ist in der Formgebung eine Lamellenbegrenzung (3) vorgesehen, so kann sich der Rücken der Verschlußlamelle (2) an dieser bei Betätigung gegen Überdehnung abstützen.

Die Federaussparung (4) wurde so gestaltet, daß die Verschlußlamelle (2) mit einem Finger einer Hand leicht zu öffnen ist und trotzdem gegen das Hundehalsband fest verschlossen bleibt.

Die ergonomische Ausgestaltung des Hunde-Einhandleinenhakens ist so angelegt, daß der Hundeführer ohne Sichtkontakt und mit nur einer Hand mühelos gleichzeitig sowohl das Hundehalsband als auch die Hundeleine handhaben kann.

Die Herstellung des einteiligen Hunde-Einhandleinenhakens bietet sich aus mancherlei Gründen vornehmlich aus Kunststoff im Spritzgußverfahren an.

Weitere Fertigungsmöglichkeiten wären solche mit härtbaren Endlosstahldrähten oder Stahlguß. Die Zusammensetzung aus mehreren Stanzteilen unter Verwendung von Gelenk und Stahlfeder für den Fangarm wäre noch eine weitere Alternative für die industrielle Fertigung.

## Patentansprüche

1. Hunde-Einhandleinenhaken, dadurch gekennzeichnet, daß durch den Fanghaken (1) eine Hundeleine mit einer Hand mit einem Hundehalsband verbunden werden kann.

2. Hunde-Einhandleinenhaken, nach Anspruch 1, dadurch gekennzeichnet, daß der Fanghaken durch die Verschlußlamelle (2) verschlossen wird.

3. Hunde-Einhandleinenhaken, nach den Ansprüchen 1-2, dadurch gekennzeichnet, daß die Verschlußlamelle (2) mit einer Federaussparung (4) versehen eine eigene Federwirkung hat und so immer verschlossen ist.

4. Hunde-Einhandleinenhaken, nach den Ansprüchen 1-3, dadurch gekennzeichnet, daß die Lamellenbegrenzung (3) so ausgeformt ist, daß die Verschlußlamelle (2a) eine Ausschlagbegrenzung (3) gegen Verbiegen oder Bruch erhält.

5. Hunde-Einhandleinenhaken, nach den Ansprüchen 1-4, dadurch gekennzeichnet, daß der Fanghaken (1) mit einer geraden Fläche (4) versehen ist, auf der das Hundehalsband einen festen Sitz bekommt.

6. Hunde-Einhandleinenhaken, nach den Ansprüchen 1-5, dadurch gekennzeichnet, daß die Funktionselemente (1-5) so ausgestaltet sind, daß unter Hinzufügung des Leinenhakenringes (6) es sich um ein integrales Element handelt.
